# EUROPEAN PATENT SPECIFICATION

(11) **EP 0 408 482 B1**
(45) Date of publication and mention of the grant of the patent: **08.10.1997**
(21) Application number: 90480083.6
(22) Date of filing: 05.06.1990
(51) Int. Cl.: G06F 17/24

(54) **Forms completion method and apparatus for forms completion**
Verfahren und Gerät zum Ausfüllen von Formularen
Méthode et appareil pour remplir des formulaires

(30) Priority: 14.07.1989 US 380069
(43) Date of publication of application: 16.01.1991
(73) Proprietor: LEXMARK INTERNATIONAL, INC., Greenwich, Connecticut 06830 (US)
(72) Inventor: Bloyd, Richard Allen, Lexington, Kentucky 40504 (US); Bowden, Jerry David, Versailles, Kentucky 40383 (US); Bowles, David John, Lexington, Kentucky 40516 (US); Hays, Douglas Earl, Lexington, Kentucky 40517 (US); Higdon, John Michael, Lexington, Kentucky 40516 (US); Perkins, Donald Bynum, Jr., Lexington, Kentucky 40517 (US)
(74) Representative: Tomlinson, Kerry John

(56) References cited:
- EP-A- 0 158 766
- US-A- 4 658 366
- IBM TECHNICAL DISCLOSURE BULLETIN. vol. 21, no. 11, April 1979, NEW YORK US pages 4323 - 4329; & J. C. JONES: 'System for simplified form fill-in using CRT display'

## Description

### FIELD OF THE INVENTION

This invention relates to the completing of preprinted forms and a means for preprinted forms completion, and more specifically to the method of shifting data field locations relative to the printer and the form to position the data at a desired position on the form and to thereby accommodate variations in form loading in the printer and variations in the printing of forms.

### BACKGROUND OF THE INVENTION

The typical office in the past has had one or more typewriters to type correspondence and fill out forms. As the mini-computers and personal computers have been introduced into the office environment to streamline office operations such as correspondence, record keeping, accounting and other related office operations, the need to complete preprinted forms in a manner that insured that the data was properly inserted in the designated data field was largely left unaddressed. The forms applications required that the office retain a typewriter when a word processor or computer was added, in view of the limitations of the printers and the problems of using the word processor or computer to complete preprinted forms.

The primary problem in using the word processor or computer, referred to as systems, for preprinted forms applications is that the operator must go through extensive revision operations to adjust the positioning of the data so that it will fall within the proper data field positions on the form. When the next form is loaded in the printer, if it is from a different batch of forms, the printing, while within the required specifications for the form, will not be precisely the same. Also when the forms are loaded, there will be variations in the relative position of the printer to the form, and if a series of forms are to be completed, it is necessary to adjust the data field positions with each loading. Another example of the need to adjust the location of the text relative to the form is the fact that a form may have been printed for use on a specific printer having a specified line feed dimension and if used on a printer with a different line feed dimension, the data entries will drift with respect to the form.

Some or all of the above problems will affect the completion of forms on systems.

US-A-4658366 (Posh) discloses a method for completing pre-printed forms on computer systems having printers with different characters-per-inch printing capabilities such that independence of the cpi density is achieved.

EP-A-0158766 (Wang) discloses a method and apparatus for pre-printing forms using a printer under the control of a video terminal keyboard. The location and length of the blanks on the form are identified using the keyboard, and lines are displayed on the video display corresponding to the blanks.

IBM Technical Disclosure Bulletin Vol 21 No. 11 (April 1979) entitled "System for simplified form fill-in using CRT display" (Gerlach and Jones) discloses a system for defining text fields suitable for filling in standard forms in which text is entered by the operator as a result of prompts and is then printed at the correct location on the form.

The International Business Machines Corporation, Armonk, New York, sells a system which is primarily designed to be used in an office environment for word processing. This system is the IBM Personal Typing System. It is comprised of a keyboard for data entry and system control, a system unit, a display and a printer. This system uses software which is known as the IBM SolutionPac program. The SolutionPac program is also marketed with a printer for use on The IBM Personal System/2 computers.

The IBM SolutionPac program provides the word processing operations and functions needed to render the Personal Typing System or the Personal System/2 computers functional for word processing applications.

It is an object of the invention to define a mark and create a file of marks, locations and data and to print data based upon the locations of the marks.

It is another object of the invention to shift the data entries relative to the data fields of a preprinted form to place the data within the data fields.

It is a further object of the invention to perform the shift selectively with respect to some of the data entries.

### SUMMARY OF THE INVENTION

A method of completing a form with a printer having data processing means comprising the steps of:
marking the points at which data is to be entered on a form;
providing in association with said marking, a relative value for at least one dimension of the location of said points at which said data is to be entered on said form;
preserving in an electonic file said marks and dimensions for later use; and
providing data to be entered on said form, at said points; characterised in that:
an offsetting value is provided for application to said relative value to define a point which is aligned with said form and at which data is to be entered onto said form; and in that
said data processing means applies said offsetting value to said relative value; and
said data processing means causes the data to be manifested on said form at said aligned point.

In at least its preferred embodiments, the invention is the combination of a computer or word processing device with a program which controls the operation of the system to accept the data entries into data fields in the memory of the system, in conjunction with codes that designate a specific data field, the relative location of the data field on a preprinted form and a prompt to indicate to the operator what data should be entered in that field and the method of offsetting of the data entries from their designated locations to align the data entries with the data fields of the preprinted form. The relative location of the data location is stored with a unique code known as a "mark". The mark code may have an annotation stored with it so that the operator is prompted as to what entry is appropriate for that mark. Also stored with the mark is a location value or values which define the relative location of the data field with respect to some assumed datum location.

The program allows the operator to position the printer over a selected data field on the form and to use the capability of the system to monitor the location coordinates to derive the values to be stored with the mark.

Alternatively, the values of the coordinates may be entered into the system by the operator, if known. The operator may determine the coordinates by estimation or by measuring the location on the page from the top left corner of the page, or by any other convenient technique.

When text is stored in the storage segments associated with the marks and replayed, the locations stored therewith are treated as destinations to which the printer is commanded to tab. If the location of the data is not as desired with respect to the preprinted form, the data and its location relative to the form may be shifted or offset to reposition the data to properly position the data within the data field on the form. This offsetting may occur, at the operator's option, with respect to all, some or one of the data fields. The operator may select a form alignment subroutine of the program which will permit the entry of the offset amount or dimension and the data fields the offset applies to. The system then updates the location values and the updated location values are used to print the form.

A more complete understanding of the invention may be had from the accompanying drawings and detailed description of the invention.

### DRAWINGS

Fig. 1 is a drawing representing a computer or word processing system of the type utilized in the invention.

Fig. 2 illustrates in a master flow diagram the sequential operations and subroutines of the system which performs the method.

Figs. 3-15 illustrate the subroutines represented in the flow diagram in Fig. 2.

### DETAILED DESCRIPTION OF THE INVENTION

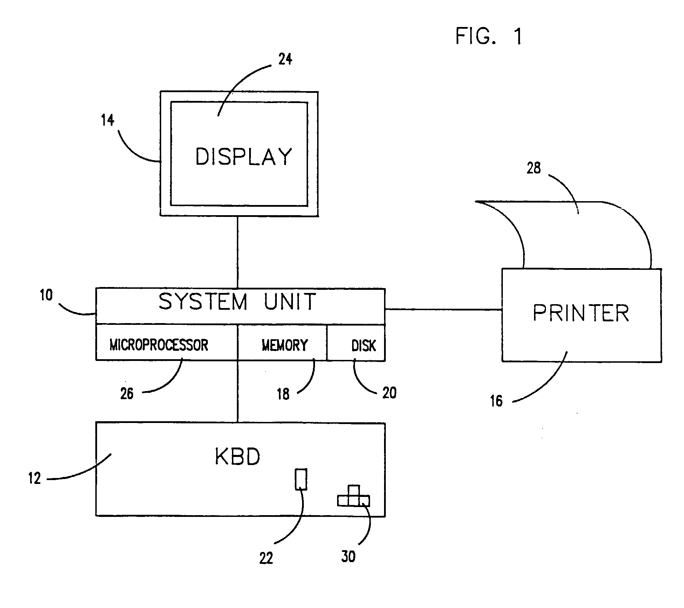

Referring to Fig. 1, the system which may be used to implement the invention is typically comprised of a system control 10, a keyboard 12 connected to the system control 10 to provide data and control inputs to the system control 10, a display 14 for displaying the data input to and operator assist instructions output by the system control 10. Also found in the typical system is a printer 16 connected to the output of the system control 10. The printer 16 should be of the type that is capable of fine increments of movement relative to the page, typically much finer that the standard line feed and letter space increments of the printer. The above system is typical of that found an IBM Personal Typing System. The system is available with either the IBM Correcting QUIETWRITER printer or the IBM Correcting WHEELWRITER printer, either of which is acceptable for the implementation of the invention.

The IBM SolutionPac program which comes with the Personal Typing System provides all the basic word processing functions needed for the operation of the system in a word processing mode.

The IBM SolutionPac program may have added to it additional programming which uses the word processing functions and in addition, adds function to the system. The invention adds the programming which utilizes the word processing functions already resident in the IBM SolutionPac program.

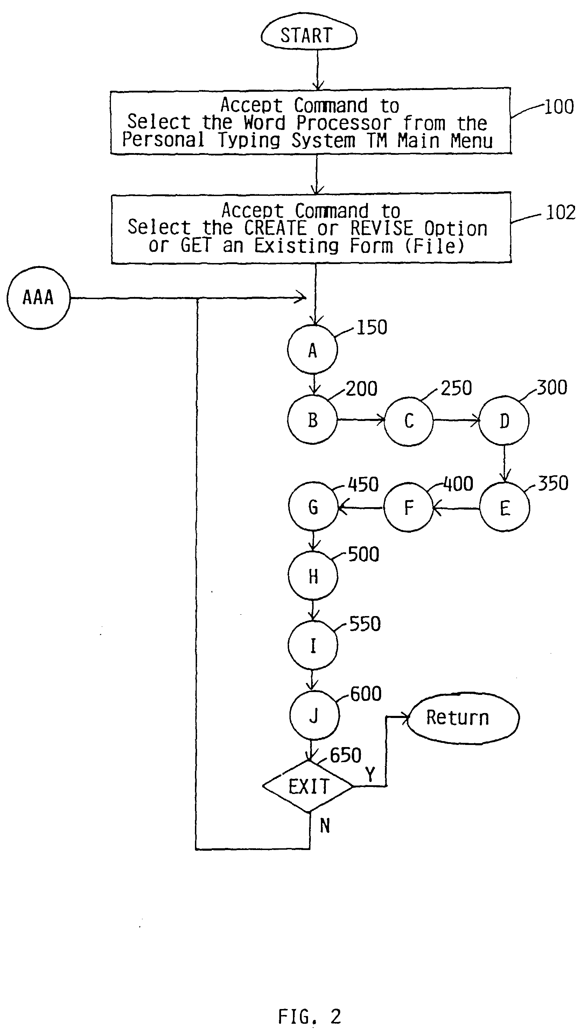

Referring to Fig. 2, it is assumed that the system of Fig. 1 is operating and has the program installed. The program permits the operator to select the Word Processor operation from the Personal Typing System main menu which is presented on the display 14. The word processing operation then permits the creation of, revision of or the retrieval or getting of a document file from either disc storage or memory, not shown but contained within the system control 10.

In order to create a document file which will define a form in terms of marks, prompts and data field locations, it is necessary to select CREATE in operation 102. The flow is then to function A and thence through functions B through J as illustrated in steps 150, 200, 250, 300, 350, 400, 450, 500, 550 and 600 respectively and then to decision block 650. The substeps contained within each of the above steps are separately described below.

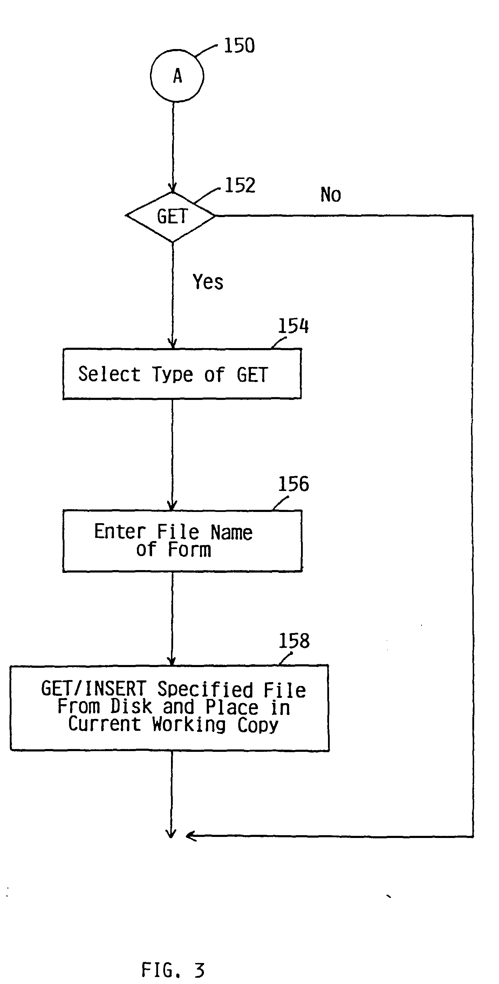

After the selection is made of CREATE, REVISE or GET in operation 102, the flow is to function A shown in detail in Fig. 3. The first operation in function A is a decision in operation 152, as to whether the command entered as a result of operation 102 is a GET Command. If the decision is No the flow branches to function B in operation 200.

If the command is a GET function, the flow is to operation 154 where the system is conditioned to prompt the operator to select the type of GET. At this point the system control 10 will accept a input from the keyboard 12 selecting either a file name or a form, as shown in operation 156. This operation is necessary to identify the file that is to be retrieved from storage, as is conventional. Upon the acceptance of the file name or form through the keyboard 12, the system control will retrieve the specified file from storage and place the file in the memory portion of the system unit 10 that is used for the working copy, for editing, as is conventional, in operation 158. These operations are found in the IBM SolutionPac program.

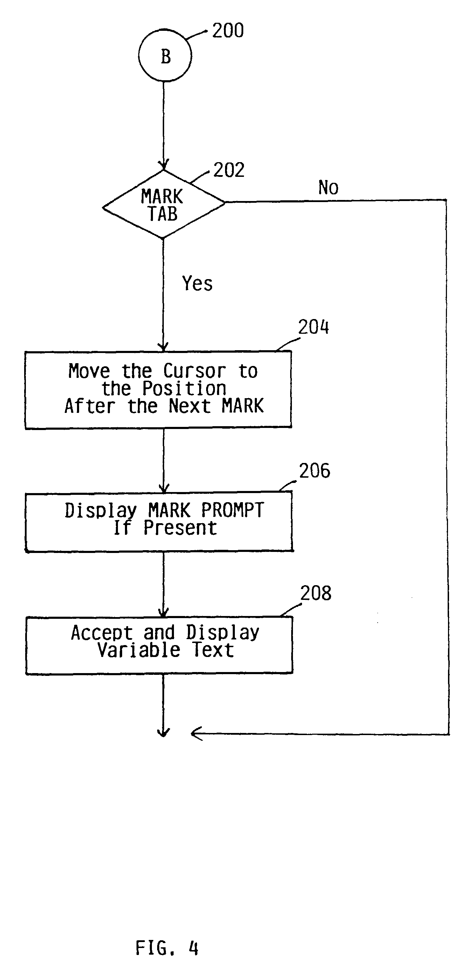

After the file is loaded in the memory 10 of the system unit 10, the system unit 10 is ready to receive commands through the keyboard 12. In order to receive the keyboard commands, the flow progresses to operation 200 which is shown in expanded form in Fig. 4. In operation 202, the keyboard input is queried and tested to determine if the input is a Mark Tab. A Mark Tab command increments the active entry point to the next designated mark. The marks may be displayed in the order which data entry is to be made. Accordingly, the program commands the cursor 24 of the display 14 to be positioned at the position immediately after the next sequential mark, as in operation 204.

If a Mark Prompt has been entered and associated with the mark, then the Mark Prompt is displayed, in operation 206, to assist the operator in the knowing what data should be entered in the data field associated with that mark. A Mark Prompt is a short phrase identifying the material to be inserted at that point, such as name, account number, address, date or other information.

Once the Mark Prompt is displayed, if present, the system unit 10 accepts and processes the text variable text or data entered through the keyboard 12. The data is displayed by the display unit 14. The accepting and displaying of the text material, in operation 208, is conventional with the word processing function of the IBM Personal Typing System with the SolutionPac program. After the data is accepted and displayed, the process proceeds to operation 250.

If the keyboard input is not a Mark Tab, as determined in operation 202, the flow branches around the subroutine just described and proceeds to subroutine 250.

Subroutine 250 is the subroutine which saves the form and the data on a disk 20.

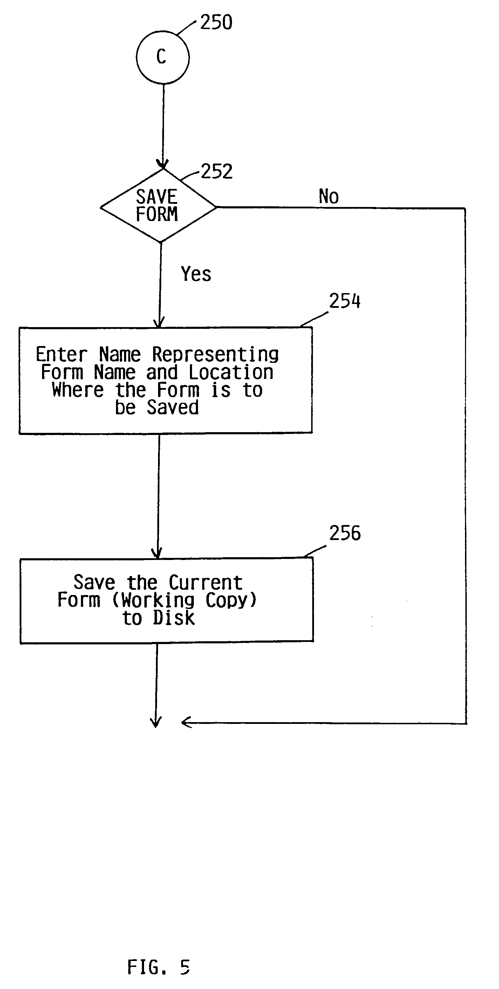

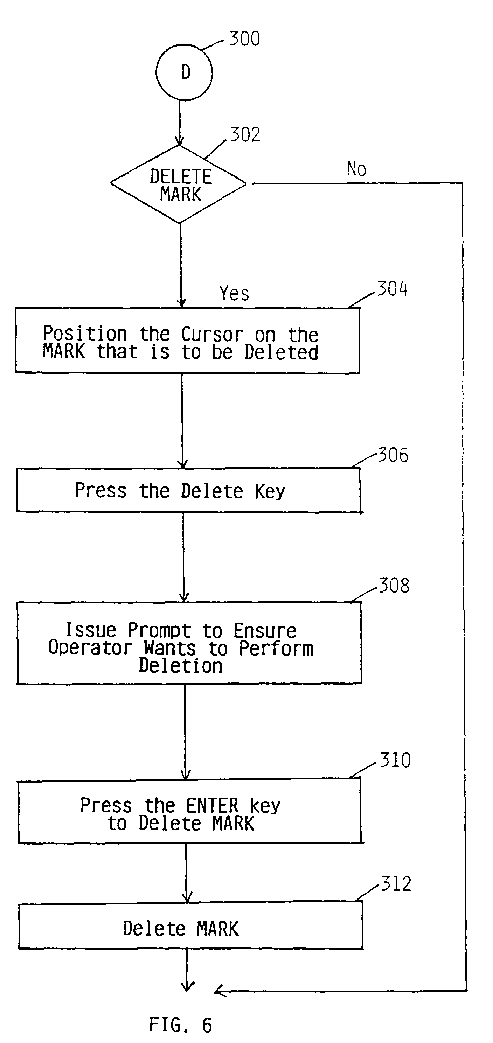

Subroutine 250 is illustrated in Fig. 5, in expanded form. The keyboard input is tested to determine if it represents a command to save the form and the data which has been entered, in operation 252. If the command is not a Save Form command the flow is directed around the subroutine in Fig 5 to operation 300 in Fig. 6.

If the command is determined to be a Save Form command, in operation 252, the flow is to operation 254 where the the file, which contains the data field locations and the data entries corresponding to the data fields, is named and a location is designated for its storage, such as which disk storage 20 is to be the storage location. After the name and location is entered in operation 254, the current working copy of the file is stored on disk storage 20, in operation 256. Thereafter, the flow is direct to operation 300 in Fig. 6. The Form Save routine is the save file function which exists it the SolutionPac program.

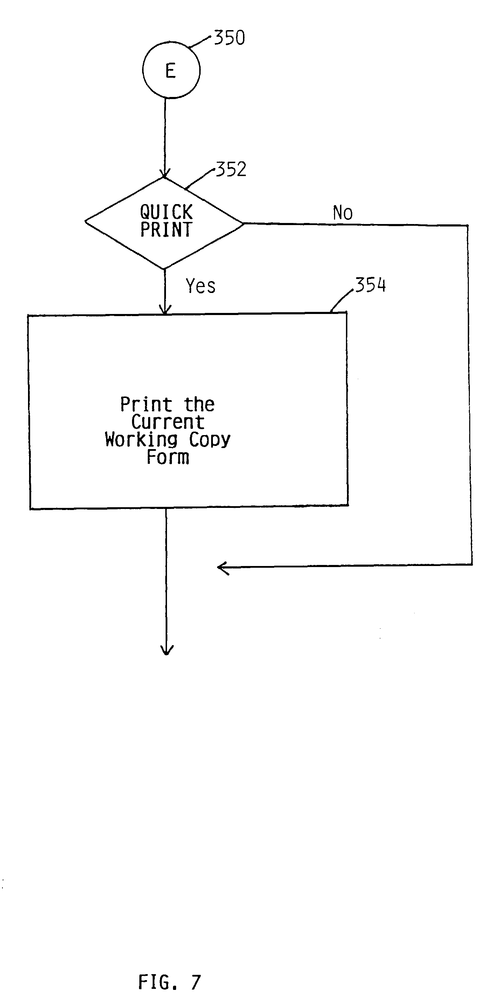

The Delete Mark subroutine 300 is shown in expanded form in Fig. 6. In subroutine 300, the keyboard input is tested to determine if the command is a Delete Mark command, in operation 302, and if the keyboard input is not a delete mark command then the control flows to subroutine 350 in Fig 7. If, on the other hand, the keyboard input is a Delete Mark function the control flow is to operation 304 where the cursor on the display 14 is is capable of movement by the manipulation of the keyboard 12 to the mark that is to be deleted. Once the cursor movement commands are entered through the keyboard 12, and the system unit 10, under program control moves the cursor to the selected mark, the operator may actuate the delete key 20 on the keyboard 12. The system unit will then cause the displaying of a prompt on the display 14 to ensure that the operator intends this result, in operation 308.

The depression of the Enter key 22 or other predesignated key 22 on the keyboard 12 causes the system unit 10 to accept the delete command in operation 310.

Upon receipt of the Enter key 22 command in operation 310, the processor of the system unit 10 deletes the codes stored in the memory of the system unit 10 that denote the Mark, in operation 312. Thereafter the flow is to subroutine 350.

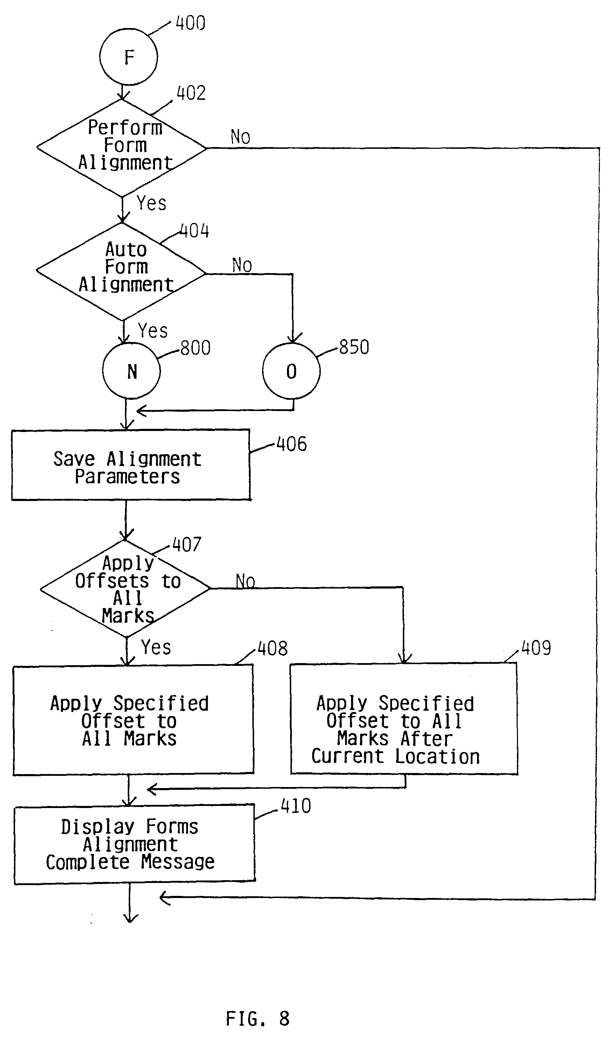

Subroutine 350 is the Quick Print operation. The Quick Print subroutine is responsible for the printing of the contents of the file of marks and any data entered without the storing of the file on disk storage 20 and then printing from disk storage 20. The keyboard command is tested in operation 352 to determine if the command is a Quick Print command. If the test results in a negative determination, the control flow is to subroutine 400 in Fig. 8.

If the determination in operation 352 is affirmative, the system unit 10, under program control, operates to control the printer and to print from memory 18, in operation 354, the data fields at locations defined by the locations associated with the marks. The printing of the file contents is performed in the same manner as the printing of a file by the IBM Personal Typing System with the IBM SolutionPac program.

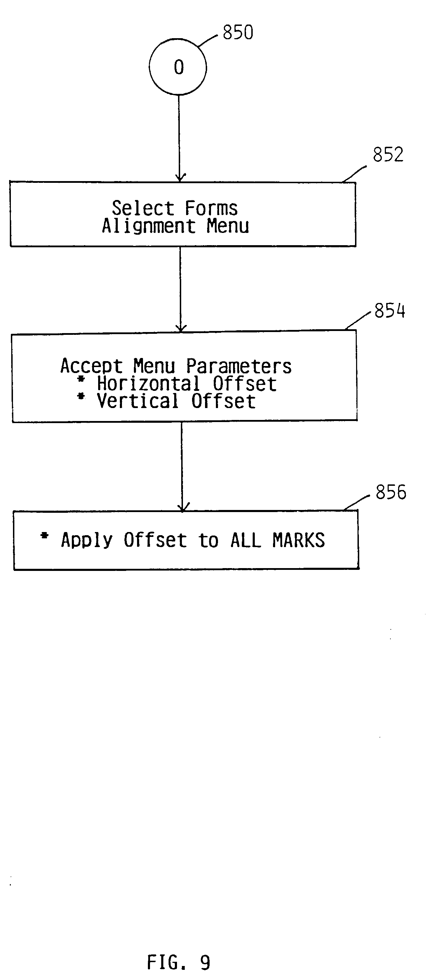

The flow from the Quick Print subroutine 350 is to the form alignment subroutine 400, in Fig. 8. The keyboard input is tested in operation 402 to determine if the input represents a Form Alignment command, and if the test results in a negative determination, the subroutine is bypassed as the control flow is directly from operation 402 to subroutine 450, in Fig. 9.

If the determination in operation 402 is affirmative, the flow branches to operation 404 where the determination is made as to whether the command is one to initiate the Automatic Form Alignment operation or a manual form alignment operation. If the test in operation 404 is negative, the control branches to subroutine 850 in Fig. 9, which is the manual form alignment routine. Referring now to Fig. 9, the system unit 10, under program control selects from its storage, the Forms Alignment menu, in operation 852. The system unit is then conditioned in operation 854 to receive the alignment parameters, which are the horizontal and vertical offset distances necessary to shift the position of the data field locations to cause the data fields to print in the desired locations on the form. These offset distances are measured in hundredths of an inch preferably, but may be in any increment and may also be in metric measure. With the parameters entered, the control reverts to operation 406.

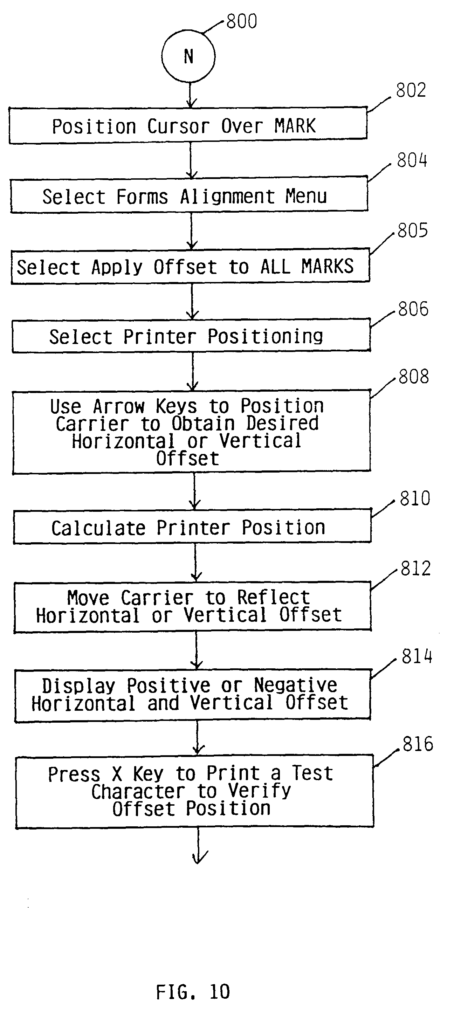

In operation 856, the offsets accepted in operations 854 are applied to all mark locations. Returning to operation 404, if the determination is affirmative, the flow of control is to subroutine 800, found in Figure 10. The automatic forms alignment subroutine 800 is invoked and the system unit 10, under program control, and with input from the keyboard 12, positions the cursor over the mark selected by the operator. The processor of the system unit 10, under program control conditions the system unit 10 to respond to a keyboard input to select the forms alignment menu and display the menu on the display 14, in operation 804. The system unit 10 will, in operation 805, apply the offsets to all marks.

In response to an operator input through the keyboard 12, the system unit will select and enable the keyboard 12 to control the positioning of the printer 16 as in operation 806. This conditioning permits the normal keyboard controls found in IBM SolutionPac programs to move the printer 16 relative to the form 28 or record sheet 28 in response to keyboard input. The keyboard input for positioning the printer customarily takes the form of signals generated by the directional control keys for moving the cursor on the display 14. The horizontal and vertical movement control keys 30, in the printing positioning mode, cause the system unit to move the printer 16, in response thereto. This is represented as operation 808.

When the printer 16 is moved relative to the form 28, away from the position of the mark, the system unit 10 keeps track of the distance moved, using the escapement controls of the SolutionPac program and the microprocessor 26 of the system unit 10, and displays the distances vertically and horizontally, as offsets on the display. The movement of the printer 16 creates the offset as shown in operation 808 and the system calculates the values of the offsets in operation 810. The display of the offset values on the display 14 is shown in operation 814 and utilizes the conventional techniques of displaying information on the display of the system, found in the operating system of the Personal Typing System and the SolutionPac program.

After the offset values are displayed on the display, the operator may invoke the printing of a character from the keyboard 12 to test the location of the print point relative to the form. This is shown in operation 816. If the character is positioned as desired, then the offset which has been determined in operation 810 and displayed in 814 is correct.

Again referring to Fig. 8, after the parameters of alignment, including the offset, have been determined in operation 854 or 816, those offset parameters are saved in the memory 18 of the system unit 10 in operation 406, in response to operator input through the keyboard 12.

After the alignment parameters are saved in memory 18, in operation 406, a decision is made as to whether the keyboard input indicates if the offsets apply to all marks, in operation 407, and if not the offsets are applied only to all marks following the current location as in operation 409. If the decision in operation 407 is affirmative, the offset is applied to all mark locations in operation 408, to cause their relocation to reflect the positions as shifted by the movement of the printer and the determination of the offset required for the relocation of the printer, as in operations 808 and 810 or operation 854. After the offsets are applied in operation 408, the display 14 will notify the operator that the forms alignment operation is complete, in operation 410.

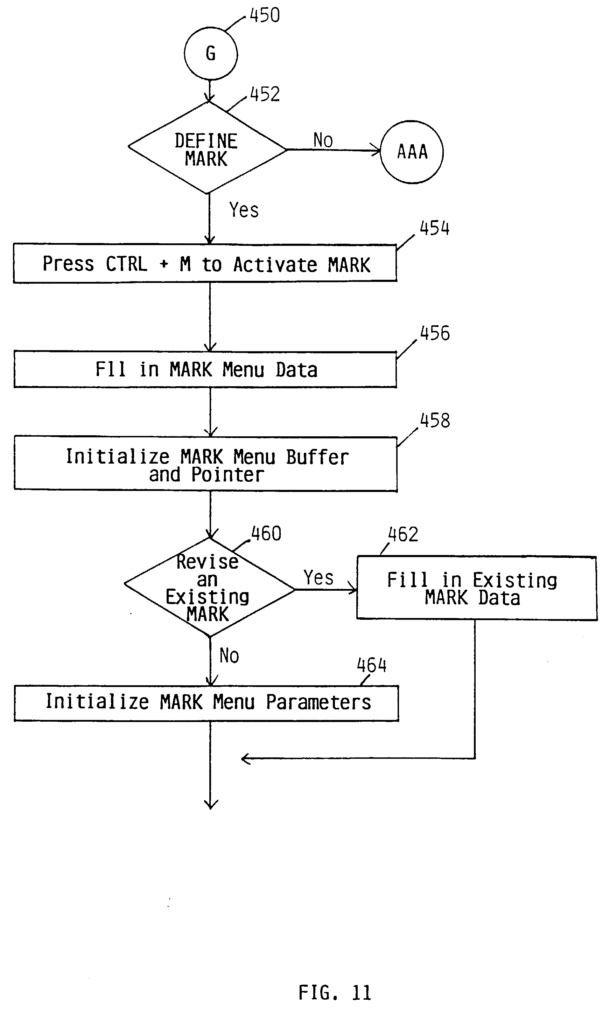

The flow from a negative decision in operation 402 or from operation 410 is to operation 452 in subroutine 450, illustrated in Fig. 11. The keyboard input signal is tested in operation 452 to determine if the signal represents a Define Mark command, in operation 452. If the test results in a negative determination, the flow from the test in operation 452 is a return to the flow path between operation 102 and subroutine 150, as seen in Fig. 2 If, on the other hand, the signal is determined to be a Define Mark command, the flow is to operation 454 where a predesignated combination of key depressions on the keyboard 12 will cause the Mark to be activated. By activating the Mark code and the field which may be used for annotations together with vertical and horizontal distances to the printer location, the system unit 10 is enabled to receive information. In conjunction with the activating of the Mark in operation 454, the mark menu is retrieved from memory 18 and displayed on the face of the display 14, in operation 456 and the buffer and pointer (part of memory 18) for the mark menu are initialized, rendering the fields blank and ready for use, in operation 458.

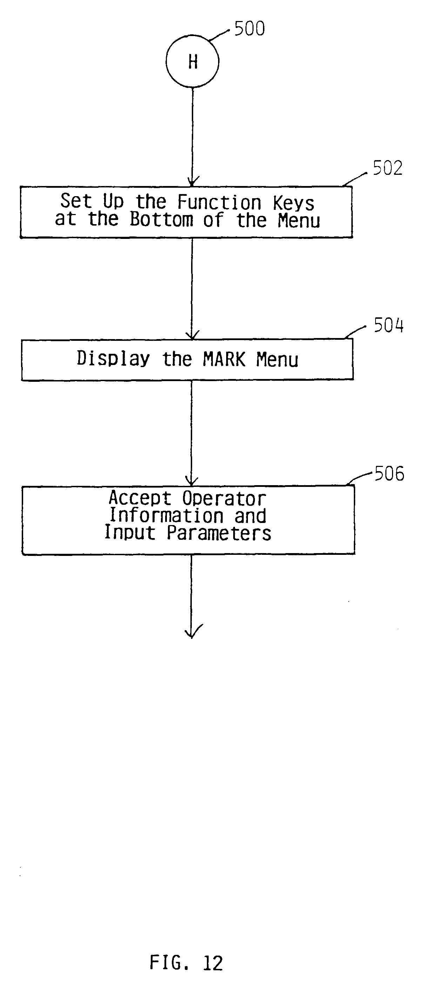

After the buffer and pointer of memory 18 have been initialized, a determination is made as to whether an existing mark is being revised in operation 460. If an existing mark is being revised, then the data relating to the existing mark is displayed in the mark menu showing the prompt and the horizontal and vertical distances associated with the data field on the form, in operation 462 and the flow of control is to subroutine H designated as 500 in Figure 12. If, on the other hand, the function is not to revise, then the mark parameters are initialized and displayed accordingly, in operation 464. From operation 464, the control flows to subroutine H, 500, in Fig. 12.

In subroutine H, operation 502 defines and displays the function keys of the keyboard 12 and displays the key designation and their meaning on the display 14. The mark menu is displayed along with the function key designations as a result of operation 504 and the microprocessor 26 of the system unit 10 is enabled to accept operator provided data and input parameters to either designate a new mark or revise an existing mark in operation 506.

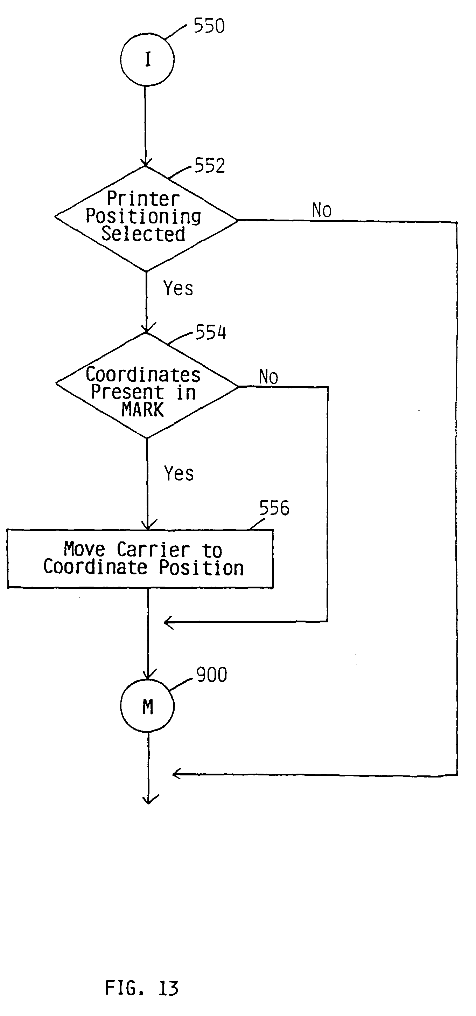

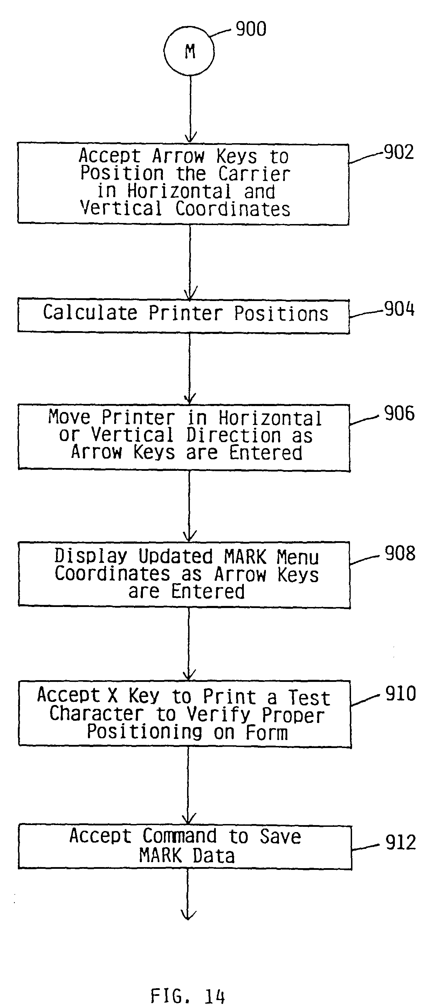

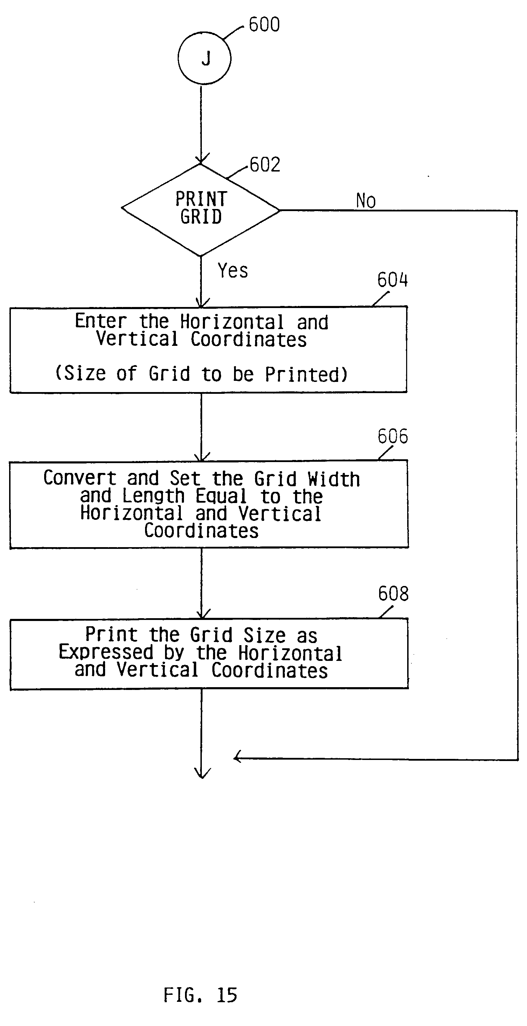

From operation 506, the flow is to subroutine I, 550, in Fig. 13, where the keyboard input is detected to determine if the printer positioning operation is selected from the keyboard, in operation 552. If the printer positioning operation is not selected the remainder of subroutine I, 550, is bypassed and the flow is to Subroutine J, 600, in Fig. 15. Should the determination be made in operation 552 that printer positioning operation is selected, then the data associated with the location of the printer is tested to determine if the coordinates of the mark are present in operation 554, and if not, then the flow branches to subroutine 900 in Figure 14.

If the coordinates are present in the mark data, the flow is from operation 554 to operation 556 where the printer is moved to the coordinate position and thence to subroutine M, 900.

Referring to Fig. 14 and subroutine M, 900, operation 902 conditions the system unit 10 to receive the signals from the horizontal and vertical control keys 30 to cause the system unit 10 to move the printer 16 to a desired location relative to the form 28.

Thereafter, in operation 904, the printer position is calculated by the system unit 10 and more precisely the microprocessor 26 therein. After the position is calculated in operation 904, the system unit 10 controls the printer in horizontal and vertical movement as the directional control keys 30 are manipulated, in operation 906 and the display of the mark menu is updated to reflect the coordinates of the print location as the printer 16 is moved in response to the movement control keys of the keyboard 12, in operation 908.

In operation 910, a character is printed in response to keyboard input of a character and the printing will serve to show the precise position of the printer 16 relative to the form 28, so that the positioning of the data may be judged relative to the data field of the form. Thereafter if the positioning of the data is satisfactory, data relating to the mark is saved in the memory of the system unit 10 for later recall. Upon the storage of the data relating to the mark, the flow is to subroutine J, 600, in Fig. 15.

Within subroutine J, 600, the signal is tested to determine if it represents a Print Grid command in operation 602. If the command is not a Print Grid command the remainder of the subroutine is bypassed and the flow is to decision block 650 to determine if the command is an exit command which would return the control to the SolutionPac program and exit from the forms application. If the command is not an exit command, then the flow returns to reenter the process flow prior to subroutine 150, at point AAA, shown in Fig. 2.

The print grid command permits the placing of a grid on the form by printing a grid of lines spaced at, for example, one inch spacings both horizontally and vertically, the lines being made up of symbols such as periods. The symbols may preferably be printed at 0.1 inch (2.54 mm) spacings. The printed grid will allow the operator to accurately estimate the position of the data fields on the form 28 and allow the operator to designate marks which are positioned properly, without having to position the printer 16 at each data field on the form. At operation 602, the system unit 10 is conditioned to accept an operator input through the keyboard 12 to define the dimensions of the grid to be printed, for example, the size of the form 28 that is to be overlaid with the grid. If the form 28 covers a sheet of 8 1/2 by 11 inch paper, and the grid is to cover the entire form the entry would be vertical coordinate of 11.00 and a horizontal coordinate of 8.50.

In operation 606, the grid is sized to the coordinates entered by the operator, as a result of the conditioning of operation 604.

The grid is printed on the form 28 as defined by the horizontal and vertical coordinates entered by the operator, in operation 608. Thereafter the flow is to decision operation 650 as described above.

The foregoing operations and processes may be implemented on a microprocessor such as an Intel 8086 or 80286, available from Intel Corporation, Santa Clara, California. The specific program coding may be performed by one of ordinary skill in the art of programming, using as a basis, the flow diagrams in Figs. 2 through 15, and the explanation set forth above.

Clearly, while the preferred implementation of the invention is using the Intel 8086 or 80286 microprocessors and the SolutionPac program on the IBM Personal Typing System, other computers or word processors using other microprocessors could be programmed to perform the operations and functions of the invention, using the teachings of the description and drawings of the invention.

The invention permits the operator to create and store a file which defines the location of each data field of a form as a Mark and to associate with the mark a prompt for the operator or description of the information or data that should be entered in that field by the operator. The operator may store this file and recall it and use it repeatedly to act as the electronic format for the completion of a form. when the data is entered into the file, it may then printed, under the control of the locations which were previously defined and associated with the marks, or the file with the data may be stored in memory to be recalled later for use at that time.

If the data is not properly aligned with the data fields of the form, the data and the coordinates of the data fields, associated marks may be shifted to precisely position the data, by aligning the marks with the data fields of the form through the applying of offsets of specified amounts to the locations coordinates of the marks. The offset may be applied either selectively to one or more marks or may be applied on a global basis to all marks in the file. This capability eliminates the need for manually shifting the form relative to the printer and guessing as to positioning, where possible. In some instances where tractor feed forms are used, it is not possible to manually shift the form in small increments to position the form accurately.

The flow diagram of Fig. 2 shows a sequential flow. It should be recognized that the flow could be structured to flow from operation 102 into an operation where the signal is decoded and, based upon its purpose, branched directly to the appropriate subroutine, with the subroutines arranged in parallel and then all subroutine outputs flow back to the decoding and branching operation. The decision as to which way the flow diagram is presented is a matter of programmer choice, and the alternatives are functional equivalents.

## Claims

1. A method of completing a form with a printer having data processing means comprising the steps of:
marking the points at which data is to be entered on a form;
providing in association with said marking, a relative value for at least one dimension of the location of said points at which said data is to be entered on said form;
preserving in an electonic file said marks and dimensions for later use; and
providing data to be entered on said form, at said points; characterised in that:
an offsetting value is provided for application to said relative value to define a point which is aligned with said form and at which data is to be entered onto said form; and in that
said data processing means applies said offsetting value to said relative value; and
said data processing means causes the data to be manifested on said form at said aligned point.

2. The method of claim 1 wherein said step of providing a relative value comprises the step of entering into storage a first dimension of said location in a horizontal direction and a second dimension of said location in a vertical direction.

3. The method of claim 2 wherein said providing step includes the step of positioning said printer relative to said form at a point at which it is desired to enter data and deriving said first and second dimensions from said position of said printer relative to said form.

4. An apparatus for the completion of a preprinted form comprising an operator operable keyboard for controlling said apparatus and providing to said apparatus textual information, a print means for printing on said form, means for receiving signals from said keyboard and controlling, in accord with said signals, said printer, means for creating an electronic file, said means for creating being arranged to further insert into said file designations of predefined operations, locations to which said operations will cause the movement of said printer and data provided through said keyboard for printing at said locations; characterised in that the apparatus further comprises means for determining displacement of said locations from desired positions relative to said form, means for applying said displacement to said locations, and means for printing said data at said positions, thereby aligning said data with the point coinciding with said desired location.

5. The apparatus of claim 4 further comprising means for selecting selected ones of said locations and applying said displacement to only said selected ones of said locations.

## Patentansprüche

1. Verfahren zum Ausfüllen eines Formulars mittels eines Druckers, der eine Datenverarbeitungsvorrichtung aufweist, umfassend die Schritte:
Markieren der Punkte, bei denen Daten in ein Formular einzutragen sind;
Bereitstellen eines Relativwerts in Zusammenhang mit der Markierung für mindestens eine Abmessung des Ortes der Punkte, bei denen die Daten in das Formular einzutragen sind;
Aufbewahren der Marken und Abmessungen in einer elektronischen Datei zur späteren Verwendung; und
Bereitstellen von in das Formular einzutragenden Daten bei den Punkten; dadurch gekennzeichnet, daß:
ein Versetzungswert zur Anwendung auf den Relativwert bereitgestellt wird, um einen Punkt zu definieren, der mit dem Formular ausgerichtet ist und bei welchem Daten in das Formular einzutragen sind; und dadurch, daß
die Datenverarbeitungsvorrichtung den Versetzungswert auf den Relativwert anwendet; und
die Datenverarbeitungsvorrichtung bewirkt, daß die Daten im Formular bei dem ausgerichteten Punkt erscheinen.

2. Verfahren nach Anspruch 1, bei dem der Schritt eines Bereitstellens eines Relativwertes den Schritt eines Eingebens einer ersten Abmessung des Ortes in einer horizontalen Richtung und einer zweiten Abmessung des Ortes in einer vertikalen Richtung in einen Speicher umfaßt.

3. Verfahren nach Anspruch 2, bei dem der Bereitstellungsschritt den Schritt umfaßt, daß man den Drucker relativ zum Formular bei einem Punkt positioniert, bei dem es erwünscht ist, Daten einzutragen, und die erste und zweite Abmessung aus der Position des Druckers relativ zu dem Formular ableitet.

4. Vorrichtung zum Ausfüllen eines Formularvordrucks, umfassend eine von einer Bedienungsperson betätigbare Tastatur zum Steuern der Vorrichtung und zum Versorgen der Vorrichtung mit Textinformation, eine Druckeinrichtung zum Drucken auf das Formular, eine Einrichtung zum Empfangen von Signalen von der Tastatur und zum Steuern des Druckers entsprechend den Signalen, eine Einrichtung zum Erzeugen einer elektronischen Datei, wobei die Einrichtung zur Erzeugung so ausgebildet ist, daß weiter in die Datei eingesetzt werden: Bezeichnungen für vorher bestimmte Programmschritte, Orte, zu denen die Programmschritte die Bewegung des Druckers bewirken, und Daten, die durch die Tastatur zum Drucken bei den Orten bereitgestellt werden; dadurch gekennzeichnet, daß die Vorrichtung weiter umfaßt eine Einrichtung zur Ermittlung einer Verschiebung der Orte von den gewünschten Positionen relativ zum Formular, eine Einrichtung zum Anwenden der Verschiebung auf die Orte und eine Einrichtung zum Drucken der Daten bei den Positionen, wodurch die Daten mit dem Punkt ausgerichtet werden, der mit dem gewiinschten Ort zusammenfällt.

5. Vorrichtung nach Anspruch 4, weiter umfassend eine Einrichtung zum Auswählen von ausgewählten der Orte und Anwenden der Verschiebung nur auf die ausgewählten Orte.

## Revendications

1. Procédé pour remplir un formulaire au moyen d'une imprimante comportant des moyens de traitement de données, qui comprend les étapes de :
marquage des points auxquels les données doivent être entrées sur un formulaire ;
fourniture, en association avec le dit marquage, d'une valeur relative pour au moins une dimension de la position des dits points auxquels les dites données doivent être entrées sur le dit formulaire ;
conservation, dans un fichier électronique, des dites marques et des dites dimensions pour utilisation ultérieure ; et
fourniture des données à entrer sur le dit formulaire, aux dits points ;
caractérisé en ce que :
une valeur de décalage est prévue pour application à la dite valeur relative afin de définir un point qui est aligné avec le dit formulaire et auquel les données doivent être entrées sur le dit formulaire ;
les dits moyens de traitement de données appliquent la dite valeur de décalage à la dite valeur relative ; et
les dits moyens de traitement de données commandent l'application des données sur le dit formulaire au dit point aligné.

2. Procédé suivant la revendication 1, dans lequel la dite étape de fourniture d'une valeur relative comprend l'étape de mise en mémoire d'une première dimension de la dite position dans une direction horizontale et d'une deuxième dimension de la dite position dans une direction verticale.

3. Procédé suivant la revendication 2, dans lequel la dite étape de fourniture comprend l'étape de positionnement de la dite imprimante par rapport au dit formulaire à un point où on désire entrer les données, et de détermination des dites première et deuxième dimensions à partir de la dite position de la dite imprimante par rapport au dit formulaire.

4. Appareil pour remplir un formulaire préimprimé, comprenant un clavier actionnable par l'opérateur pour commander le dit appareil et fournir des informations textuelles au dit appareil, des moyens d'impression pour imprimer sur le dit formulaire, des moyens de réception de signaux venant du dit clavier et de commande de la dite imprimante en accord avec les dits signaux, et des moyens de création d'un fichier électronique, les dits moyens de création étant agencés pour insérer en outre dans le dit fichier des désignations d'opérations prédéfinies, des emplacements auxquels les dites opérations provoqueront le mouvement de la dite imprimante et des données fournies par l'intermédiaire du dit clavier pour impression aux dits emplacements ;
caractérisé en ce que l'appareil comprend en outre des moyens pour déterminer le décalage des dits emplacements à partir des positions désirées par rapport au dit formulaire, des moyens pour appliquer le dit décalage aux dits emplacements, et des moyens pour imprimer les dites données aux dites positions, afin d'aligner les dites données avec le point qui coîncide avec le dit emplacement désiré.

5. Appareil suivant la revendication 4, comprenant en outre des moyens de sélection d'emplacements choisis parmi les dits emplacements et d'application du dit décalage seulement aux dits emplacements choisis.
